# EUROPÄISCHE PATENTSCHRIFT

(11) **EP 2 567 855 B1**
(45) Veröffentlichungstag und Bekanntmachung des Hinweises auf die Patenterteilung: **17.11.2021**
(21) Anmeldenummer: 12183321.4
(22) Anmeldetag: 06.09.2012
(51) Int. Cl.: B60L 5/18

(54) **Vorrichtung zur Auswahl eines Stromabnehmers eines Schienenfahrzeugs sowie Verfahren zum kontaktlosen Erkennen eines Spannungssystems**
Device for selecting a power consumer of a rail vehicle and method for contactless detection of a power system
Dispositif de sélection d'une prise de courant d'un véhicule sur rail ainsi que procédé de détection sans contact d'un système de tension

(30) Priorität: 07.09.2011 DE 102011053361
(43) Veröffentlichungstag der Anmeldung: 13.03.2013
(73) Patentinhaber: Bombardier Transportation GmbH, 10785 Berlin (DE)
(72) Erfinder: Maaß, Jörg-Torsten, 16515 Oranienburg (DE)
(74) Vertreter: Zimmermann & Partner Patentanwälte mbB

(56) Entgegenhaltungen:
- EP-A1- 2 081 207
- EP-A2- 0 904 973
- WO-A1-2010/146643
- CA-A1- 2 755 340
- JP-A- 2010 183 802
- KR-B1- 100 994 164
- US-A- 4 121 154
- None

## Beschreibung

### Technisches Gebiet

Die Erfindung liegt auf dem Gebiet der Schienenfahrzeugtechnik und betrifft eine Vorrichtung zur Auswahl eines Stromabnehmers eines Schienenfahrzeugs. Weiterhin betrifft die Erfindung ein Verfahren zum kontaktlosen Erkennen eines Spannungssystems sowie zur Auswahl eines Stromabnehmers eines Schienenfahrzeugs.

### Vorbekannter Stand der Technik

In Europa kommen unterschiedliche Bahnstromsysteme (oftmals auch als Spannungssysteme bezeichnet) mit unterschiedlich hohen Fahrleitungsspannungen zum Einsatz. Die wesentlichen Spannungssysteme sind dabei die beiden Gleichspannungssysteme DC 1,5 kV und DC 3 kV sowie die beiden Wechselspannungssysteme AC 15 kV und 25 kV.

Bei sogenannten Mehrsystem-Fahrzeugen, die für verschiedene Bahnstromsysteme ausgelegt sind, muss vor Einschalten des Fahrzeug-Hauptschalters das gewählte Spannungssystem überprüft und als korrekt erkannt werden. Mehrsystem-Fahrzeuge weisen dazu unterschiedliche Stromabnehmer (auch als Pantograph bezeichnet) auf, die an das jeweilige Bahnstromsystem angepasst sind.

Bei jedem Aufrüsten eines Mehrsystem-fähigen Triebfahrzeugs sowie bei einem Wechsel zwischen verschiedenen Bahnstromsystemen (Systemwechsel beispielsweise bei grenzüberschreitendem Verkehr) wird vom Triebfahrzeugführer der zum Bahnstromsystem zugehörige Stromabnehmer ausgewählt und durch die Fahrzeugsteuerung angehoben. Die am Fahrdraht anliegende Spannung wird anschließend durch eine Mehrsystem-fähige Spannungsdetektion erfasst. Wenn das tatsächlich anliegende Spannungssystem mit dem gewählten übereinstimmt und die Spannungspegel in den zulässigen Grenzen liegen, wird die weitere Zuschaltung von Komponenten (Systemwahlschalter, Fahrzeughauptschalter) freigegeben. Da im Moment des Anhebens des Stromabnehmers die am Fahrdraht anliegende Spannung nicht sicher bekannt ist, fordert die Technische Spezifikation für Interoperabilität (TSI) für Mehrsystem-fähige Triebfahrzeuge in Europa, dass alle Stromabnehmer des Triebfahrzeugs für die höchstmögliche Spannung von 25 kV zu isolieren sind.

So beschreibt beispielsweise DE 1 225 695 ein System zum Erfassen der am Fahrdraht anliegenden Spannung, bei dem einer der Stromabnehmer als Prüfstromabnehmer dient, über den die an ihm anliegende Spannung gemessen werden kann.

Aus der DE 197 27 218 C1 ist eine Diskriminatorschaltung zur Unterscheidung von Hochspannungs-Gleichspannung und Hochspannungs-Wechselspannung bekannt, die verwendet wird, um zu entscheiden, mit welcher Spannung der Fahrdraht versorgt wird.

In JP-09-261803 A ist ein Verfahren zum Umschalten zwischen Stromabnehmern beschrieben. Fährt ein Schienenfahrzeug beispielsweise in einen Bereich, in dem die Umschaltung von Wechselspannung auf Gleichspannung erfolgt, wird der Stromabnehmer für die Gleichspannung zusätzlich zu dem bereits angehobenen Stromabnehmer für die Wechselspannung angehoben, wobei der Stromabnehmer für die Gleichspannung durch einen Schutzschalter elektrisch noch vom Schienenfahrzeug getrennt ist. Damit stehen beide Stromabnehmer in Kontakt mit dem mit Wechselspannung beaufschlagten Fahrdraht. Der Stromabnehmer für die Wechselspannung wird dann durch einen Schutzschalter vom Schienenfahrzeug getrennt, wenn durch eine Messeinrichtung ermittelt wurde, dass keine Wechselspannung mehr anliegt, beispielsweise, wenn das Schienenfahrzeug in den stromlosen Abschnitt des Umschaltbereichs eingefahren ist. Anschließend wird der Schutzschalter des Stromabnehmers für die Gleichspannung geschlossen und der Stromabnehmer für die Wechselspannung abgesenkt. Nachteil dieser Lösung ist, dass beide Stromabnehmer-Anordnungen hinsichtlich der Isolation gegenüber dem Fahrzeugkörper auf die jeweils höchste zu erwartende Netzspannung ausgelegt sein müssen, damit es unter keinen Überschlägen zwischen Stromabnehmer und Fahrzeugdach kommen kann. Hinzu kommt, dass alle mit dem Anheben der Stromabnehmer in Kontakt zur Netzspannung kommenden Komponenten sowohl für Gleich- als auch Wechselspannung ausgelegt sein müssen, was insbesondere für induktive Komponenten nachteilig ist und einen höheren technischen Aufwand erfordert.

In der CA 2755 340 A1 ist ein System zum Schalten zwischen zwei Wechselspannungssystemen offenbart. Ein Wechsel des Stromabnehmers erfolgt dabei nicht. Ziel der CA 2755340 A1 ist es, die Primärspule des Haupttransformators "in Phase" mit dem neuen Wechselspannungssystem zu bringen, um Einschaltstoßströme zu vermeiden. Dazu wird die Phase und die Spannung des neuen Wechselspannungssystems messtechnisch erfasst und eine damit in Phase liegende Wechselspannung in die Primärspule eingeprägt, bevor eine elektrische Verbindung der Primärspule mit dem Fahrdraht hergestellt wird.

Die JP 2010 183 802 A beschreibt Schienenfahrzeug mit zwei Stromabnehmern und eine Kontrolle einer Stromabnehmerhebereinrichtung.

Die WO 2010/146643 A1 befasst sich mit einen Hybridfahrzeug für elektrifizierte und nicht elektrifizierte Strecken, nicht jedoch mit Mehrsystemschienenfahrzeugs mit mindestens zwei für unterschiedliche Spannungssysteme ausgelegten Stromabnehmern.

Aus der EP 2 081 207 A1 ist ein Verfahren zum Wechseln von Stromabnehmern eines Mehrsystemschienenfahrzeugs bekannt. Dort wird nach Anheben und Abgreifen der am Fahrdraht anliegenden Spannung entschieden, ob der richtige Stromabnehmer angehoben wurde.

Die EP 0 904 973 A2 offenbart ein Betriebsverfahren für ein Stromsystem eines Mehrsystemschienenfahrzeugs nach dem Wechsel des Stromabnehmers.

Die US 4 121 154 A und die KR 100 944 164 B1 beschreiben Sensoren für die Spannungsmessung.

### Nachteile des Standes der Technik

Die vorbekannten Lösungen sind jedoch nur teilweise zufriedenstellend und erfordern einen hohen technischen Aufwand. Außerdem können sie eine Fehlauswahl des Stromabnehmers nicht sicher ausschließen.

### Problemstellung

Es ist daher Aufgabe der vorliegenden Erfindung, eine Vorrichtung zur Auswahl eines Stromabnehmers von Schienenfahrzeugen mit verbesserter Erkennung des Bahnstromsystems bereitzustellen sowie ein diesbezügliches Verfahren anzugeben.

### Erfindungsgemäße Lösung

Diese Aufgabe wird gelöst durch eine Vorrichtung nach Anspruch 1. Weiterhin wird diese Aufgabe durch ein Verfahren nach Anspruch 3 gelöst. Weiterhin wird diese Aufgabe durch ein Schienenfahrzeug nach Anspruch 5 gelöst. Weitere Ausführungsformen, Modifikationen und Verbesserungen ergeben sich anhand der folgenden Beschreibung und der beigefügten Ansprüchen.

Gemäß einer Ausführungsform wird eine Vorrichtung zur Auswahl eines Stromabnehmers eines Schienenfahrzeugs bereitgestellt. Die Vorrichtung umfasst zumindest ein Sensorsystem, das eingerichtet ist, zwischen unterschiedlichen an einem Fahrdraht anliegenden Spannungssystemen kontaktlos zu unterscheiden, sowie ein Steuersystem zur Auswahl eines Stromabnehmers auf Basis des vom Sensorsystem ermittelten Spannungssystems.

Ziel der Erfindung ist es, die Erkennung des anliegenden Bahnstromsystems oder Spannungssystems zu ermöglichen, ohne dazu einen Stromabnehmer anzuheben. Das anliegende Bahnstromsystem wird daher vor dem eigentlichen Aufrüsten ermittelt, sodass Fehlaufrüstungen bereits im Vorfeld unterbunden werden können. Dazu gibt es beispielsweise zwei Möglichkeiten.

Unter einem Spannungssystem werden dabei insbesondere die bekannten Bahnstromsysteme verstanden, wobei in einem ersten Schritt bei der Erkennung des anliegenden Spannungssystems (Bahnstromsystems) zunächst nur zwischen Gleichspannungs- und Wechselspannungssystemen unterschieden werden kann.

Zum einen kann das anliegende Spannungssystem gemäß einer Ausführungsform an einem oder am jeweils zur Aufrüstung vorgewählten Stromabnehmer erfasst werden. Der Stromabnehmer kann dazu in einen beispielsweise kapazitiven Spannungsteiler integriert sein. Eine Kapazität des kapazitiven Spannungsteilers wird dabei zwischen dem nicht angehobenen Stromabnehmer und dem Fahrdraht gebildet. Diese Kapazität ist über eine vordefinierte, auch als Messkapazität bezeichnete Kapazität mit einem Bezugspotenzial verbunden. Der Knoten zwischen den beiden Kapazitäten kann über einen Spannungswandler, beispielsweise einen induktiven Spannungswandler, mit dem Bezugspotenzial verbunden sein. Bei dem zur Erfassung des anliegenden Spannungssystems verwendeten Stromabnehmer kann es sich um

einen beliebigen der mehreren Stromabnehmer handeln, über die ein Mehrsystem-Schienenfahrzeug oder Mehrsystem-Triebfahrzeug verfügt. Es ist auch möglich, dass lediglich nur einer der Stromabnehmer, unabhängig davon, welches Spannungssystem am Fahrdraht anliegt, für die Systemerfassung vorgesehen ist. In diesem Fall muss nur dieser Stromabnehmer in den kapazitive Spannungsteiler integriert sein, wodurch sich der bauteiltechnische Aufwand reduziert. Sofern der jeweils vorgewählte Stromabnehmer zur kontaktlosen Spannungserfassung verwendet wird, muss jeder der Stromabnehmer in den kapazitiven Spannungsteiler integriert sein. Alternativ kann jeder Stromabnehmer in einen separaten kapazitiven Spannungsteiler integriert sein.

Gemäß einer Ausführungsform weist daher das Sensorsystem einen kapazitiven Spannungsteiler zum Erfassen des Spannungssystems mit einer Messkapazität auf. Das Sensorsystem kann weiterhin einen induktiven Spannungswandler aufweisen, der die über die Messkapazität des kapazitiven Spannungsteilers abfallende Spannung erfasst.

Anstelle des induktiven Spannungswandlers kann auch ein anderer Wandler verwendet werden. Geeignete Wandler sind beispielsweise solche, die ein resistiv-kapazitives Verhalten aufweisen.

Gemäß einer Ausführungsform ist zumindest einer der Stromabnehmer, wenn er keinen Kontakt zum Fahrdraht hat, Teil des kapazitiven Spannungsteilers, wobei zwischen Stromabnehmer und einem Bezugspotenzial die Messkapazität geschaltet ist, zu der der induktive Spannungswandler parallel geschaltet ist.

Zum anderen kann das am Fahrdraht anliegende Spannungssystem gemäß einer Ausführungsform zentral für das gesamte Schienenfahrzeug oder Triebfahrzeug erfasst werden. So kann beispielsweise pro Zug nur ein spezieller Systemsensor zur Anwendung gelangen, über den das anliegende Spannungssystem erfasst wird. Gemäß einer Ausführungsform kann die Anzahl der zur Erfassung der am Fahrdraht anliegenden Spannung geeigneten Systemsensoren aus Redundanzgründen auf beispielsweise zwei verdoppelt werden.

Erfindungsgemäß umfasst daher das Sensorsystem wenigstens einen Feldsensor oder einen kapazitiven Sensor, der elektrisch gegenüber den Stromabnehmern isoliert ist. Der kapazitive Sensor und der Feldsensor können dafür ausgelegt sein, sowohl ein elektrisches Wechselfeld als auch ein statisches Gleichfeld zu erfassen. Es ist auch möglich, zum Erfassen von elektrischen Wechselfeldern und Gleichfeldern unterschiedliche Sensoren zu verwenden. Der oder die verwendeten Sensoren können gemäß einer Ausführungsform so ausgebildet sein, dass elektrische Gleichfelder auch für den Fall sicher bestimmt werden können, bei dem zwar eine Spannung am Fahrdraht anliegt, jedoch kein Strom durch den Fahrdraht fließt, so dass lediglich das elektrische Potenzial erfasst werden kann. Für den Nachweis elektrostatischer Felder, welche im Zusammenhang mit Gleichspannungssystemen auftreten, lassen sich vorteilhaft Elektroskope, Elektrofeldmeter oder auch Rotationsvoltmeter einsetzen.

Gemäß einer Ausführungsform kann daher das Sensorsystem über wenigstens zwei Sensoren verfügen, die gleichzeitig oder nacheinander zur Erfassung des anliegenden Spannungssystems abgefragt werden, wobei einer der beiden Sensoren zum Erfassen einer Wechselspannung und der andere der beiden Sensoren zum Erfassen einer Gleichspannung ausgelegt ist.

Gemäß einer Ausführungsform kann die Vorrichtung sicher zwischen einem Gleichstromsystem (Gleichspannungssystem) und einem Wechselstromsystem (Wechselspannungssystem) unterscheiden. Dadurch kann sichergestellt werden, dass bei Anliegen einer Wechselspannung am Fahrdraht nur ein für Wechselspannungen ausgelegter Stromabnehmer angehoben wird. Dies ermöglicht es beispielsweise, den oder die für Gleichspannung ausgelegten Stromabnehmer mit einer geringeren Spannungsklasse gegen das Schienenfahrzeug zu isolieren. Da die typischerweise verwendeten Gleichspannungssysteme nur 1,5 kV oder 3 kV betragen, werden zur Isolation der dafür ausgelegten Stromabnehmer nur Isolatoren für diese Spannungsklasse benötigt, während für die typischerweise verwendeten Wechselspannungssysteme von 15 kV und 25 kV Isolatoren einer deutlich höhere Spannungsklasse benötigt werden. Es ist somit möglich, kleinere und kompaktere Isolatoren, beispielsweise Stützisolatoren, für die Gleichspannungsstromabnehmer zu verwenden, wodurch die Gesamtbauhöhe der Gleichspannungsstromabnehmer verringert werden kann.

Die Unterscheidung zwischen Wechselspannung und Gleichspannung kann weiterhin relativ einfach und sicher über eine Frequenzfilterung erfolgen. Das Sensorsystem kann daher gemäß einer Ausführungsform eine Einrichtung zur Frequenzfilterung eines erfassten Spannungssignals umfassen. Das 25-kV Bahnstromsystem wird mit 50 Hz gespeist, während das 15-kV Bahnstromsystem mit 16,7 Hz gespeist wird. Ergibt die Filterung, dass eine der beiden Frequenzen vorliegt, dann handelt es sich um ein Wechselspannungssystem. Ergibt die Filterung keine Frequenz, dann liegt entweder eine Gleichspannung oder gar keine Spannung am Fahrdraht an. Anhand der unterschiedlichen Frequenz kann darüber hinaus auch sicher zwischen den beiden Wechselspannungssystemen unterschieden werden. Darüber hinaus kann alternativ oder zusätzlich auch die Höhe des erfassten Spannungssignals zur Bewertung herangezogen werden.

Gemäß einer Ausführungsform kann die Frequenzfilterung auch zur sicheren Erkennung einer anliegenden Gleichspannung verwendet werden. Gleichspannung für den Bahnbetrieb wird durch Umspannwerke, die auch als Unterwerke bezeichnet werden, bereitgestellt. Dazu werden Umrichter (Gleichrichter) verwendet, welche eine Wechselspannung in eine Gleichspannung überführen. Die so erzeugte Gleichspannung ist jedoch nicht ideal, sondern wellig und weist einen mit Oberwellen behafteten Verlauf auf. Das damit verbundene Frequenzmuster kann, beispielsweise in Kombination mit einer eventuellen Erfassung der Spannung, zur Erkennung und Unterscheidung der Gleichspannungssysteme herangezogen werden. Somit ist es beispielsweise möglich, auf Basis der Frequenzfilterung zu erkennen, ob eine Gleichspannung oder gar keine Spannung am Fahrdraht anliegt.

Gemäß einer Ausführungsform wird ein Verfahren zur Auswahl eines Stromabnehmers bereitgestellt. Das Verfahren umfasst das Erfassen eines am Fahrdraht anliegenden Spannungssignals durch eine kontaktlose Messung, das Vergleichen des kontaktlos erfassten Spannungssignals mit vorgegebenen Kriterien und die Auswahl eines Spannungssystems auf Basis des erfassten Spannungssignals. Danach erfolgt das Anheben eines dem ausgewählten Spannungssystem zugeordneten Stromabnehmers, um damit die am Fahrdraht anliegende Spannung abzugreifen. Nachfolgend wird entschieden, ob das kontaktlos ermittelte Spannungssystem mit der abgegriffenen Spannung vereinbar ist.

Das Spannungssystem wird demnach zunächst kontaktlos ermittelt, wobei dazu das am Fahrdraht anliegende Spannungssignal kontaktlos erfasst und einem Vergleich mit vorgegebenen Kriterien unterworfen wird. Auf Basis dieses Vergleichs wird ein Stromabnehmer ausgewählt und angehoben und dann messtechnisch geprüft, ob die tatsächlich anliegende Spannung mit dem auf Basis der kontaktlosen Erfassung ermittelten Spannungssystem übereinstimmt. Erst danach erfolgt die Freigabe weiterer Komponenten.

Es ist dabei unerheblich, ob zuerst ein Spannungssystem (Bahnstromsystem) gewählt, dann das Spannungssignal kontaktlos ermittelt und nachfolgend überprüft wird, ob das vorgewählte Bahnstromsystem mit dem kontaktlos erfassten Spannungssignal vereinbar ist, oder ob zuerst das Spannungssignal kontaktlos erfasst und dann ein damit zu vereinbarendes Bahnstromsystem gewählt wird. Jedenfalls erfolgt die Erfassung des Spannungssystems bevor die weitere Aufrüstung des Triebfahrzeugs für das jeweilige Bahnstromsystem freigegeben wird. Dadurch werden Fehlaufrüstungen vermieden. Insbesondere können, wie bereits weiter oben beschrieben, die Gleichspannungs-Stromabnehmer mit einer entsprechend geringeren Isolation oder kleineren Isolationsstützkörpern ausgestattet werden, wodurch Gewicht und Bauhöhe reduziert werden können. Außerdem kann das Aufrüsten insgesamt energieeffizienter gestaltet werden, da der Aufwand einer versehentlichen Fehlaufrüstung vermieden wird.

Die Kriterien zur Bewertung des erfassten Spannungssignals können gemäß einer Ausführungsform so gewählt werden, dass sicher zwischen Gleichspannung und Wechselspannung unterschieden wird. Es ist weiterhin möglich, die Kriterien so zu wählen, dass zusätzlich innerhalb der Wechselspannungssysteme sicher zwischen den einzelnen Wechselspannungsklassen unterschieden werden kann. Die Unterscheidung kann beispielsweise nach der Höhe des Spannungssignals erfolgen.

Gemäß einer Ausführungsform wird das erfasste Spannungssignal einer Frequenzfilterung unterworfen und das Ergebnis der Frequenzfilterung zur Entscheidung herangezogen, ob das erfasste Spannungssignal mit dem vorgewählten Bahnstromsystem gemäß der vorgegebenen Kriterien vereinbar ist.

Die Frequenzfilterung ermöglicht eine sehr zuverlässige Unterscheidungsmöglichkeit insbesondere innerhalb der Wechselspannungssysteme und im Vergleich mit den Gleichspannungssystemen. Es ist jedoch auch möglich, für die Bewertung der Gleichspannungssysteme auf die Frequenzfilterung zurückzugreifen.

Gemäß einer Ausführungsform wird das Spannungssignal kapazitiv gegenüber einem Bezugspotenzial erfasst. Die kapazitive Erfassung des Spannungssignals kann beispielsweise unter Verwendung eines kapazitiven Spannungsteilers erfolgen, wobei eine der beiden Kapazitäten des kapazitiven Spannungsteilers durch den Luftraum zwischen einem der nicht angehobenen Stromabnehmer und dem Fahrdraht gebildet wird.

Daher wird gemäß einer Ausführungsform ein nicht angehobener Stromabnehmer zur kapazitiven Messung des Spannungssignals verwendet, wobei der nicht angehobene Stromabnehmer Teil eines kapazitiven Spannungsteilers ist.

Gemäß einer Ausführungsform wird das Spannungssignal mittels eines kapazitiven Sensors oder eines Feldsensors erfasst, der elektrisch gegenüber den Stromabnehmern isoliert ist. Es kann sich um einen von den Stromabnehmern separaten Sensor handeln. Es kann lediglich der Sensor, oder der Sensor zusammen mit dem oben beschriebenen kapazitiven Spannungsteiler unter Verwendung eines der Stromabnehmer verwendet werden, um die Zuverlässigkeit bei der Erkennung des anliegenden Bahnstromsystems zu verbessern.

Gemäß der Erfindung erfolgt ein Zuschalten weiterer Komponenten, wenn der angehobene Stromabnehmer mit der abgegriffenen Spannung vereinbar ist. Dies stellt eine weitere Sicherheitsmaßnahme dar.

Gemäß einer Ausführungsform wird ein Schienenfahrzeug mit wenigstens einem erstem Stromabnehmer, der für Wechselspannung ausgelegt ist, und einem zweiten Stromabnehmer, der für Gleichspannung ausgelegt ist, bereitgestellt. Jeder der Stromabnehmer ist über jeweilige Isolatoren gegenüber dem Fahrzeugdach des Schienenfahrzeugs isoliert, wobei die Isolatoren des zweiten Stromabnehmers eine kleinere Spannungsklasse aufweisen als die Isolatoren des ersten Stromabnehmers.

Die vorstehend beschriebenen Ausführungsformen können beliebig miteinander kombiniert werden.

### Figuren

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.
Figur 1 zeigt einen Stromabnehmer eines Schienenfahrzeugs, der für die kapazitive Erfassung des am Fahrdraht anliegenden Spannungssignals verwendet wird.
Figur 2 zeigt ein Schienenfahrzeug gemäß einer Ausführungsform.
Figur 3 zeigt eine weitere Ausführungsform.

### Ausführungsbeispiele

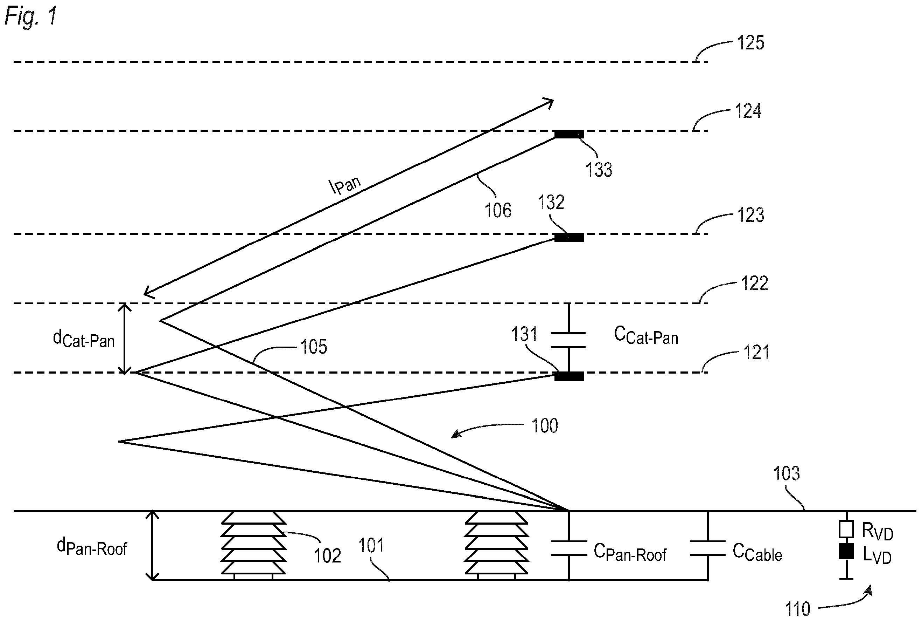

Figur 1 zeigt einen Stromabnehmer 100 eines hier nicht weiter dargestellten Schienenfahrzeugs. Der Stromabnehmer 100, der beispielsweise in Form eines Einholmstromabnehmers mit einem Unterarm 105 und einem Oberarm 106 ausgeführt sein kann, ist auf einem Rahmen 103 montiert, der auf einem Fahrzeugdach 101 des Schienenfahrzeugs montiert ist. Der Rahmen 103, und damit der Stromabnehmer 100, ist gegenüber dem Fahrzeugdach 101 mittels Stützisolatoren 102 isoliert. Es ist auch möglich, den Stromabnehmer 100 ohne isolierenden Rahmen 103 auf dem Fahrzeugdach 101 zu befestigen. Dann weist der Stromabnehmer 100 jedoch integrierte Isolatoren auf, welche die mit dem Fahrdraht in Berührung kommenden Bauteile gegen das Fahrzeugdach 101 isolieren. Das Fahrzeugdach 101 befindet sich typischerweise auf Fahrzeugmassepotenzial. Das Potenzial (Fahrzeugmassepotenzial) des Fahrzeugdaches 101 dient hier als Bezugspotenzial, wobei es in erster Näherung mit dem Erdpotenzial gleichgesetzt werden kann.

Der Stromabnehmer 100 ist hier in verschiedenen Lagen zu sehen. In Lage 131 befindet sich der Stromabnehmer 100 in Senklage, wobei mit 121 die maximale Höhe des Stromabnehmers 100 in Senklage angedeutet ist. Unter der Höhe des Stromabnehmers 100 wird hier die Höhe des höchsten Punkts des Stromabnehmers 100 verstanden.

In Lage 132 befindet sich der Stromabnehmer 100 in minimaler Arbeitshöhe 123 bei Betriebsgeschwindigkeit. Da der Fahrdraht nicht immer auf gleicher Höhe verläuft, sondern schwerkraftbedingt in Form einer Seilkurve verläuft, kann der Stromabnehmer 100 im Fahrbetrieb dem Verlauf des Fahrdrahts nachgeführt werden. Daher ist mit 133 die Lage bei maximaler Arbeitshöhe 124 bei Betriebsgeschwindigkeit angedeutet. Weiterhin sind die minimale Arbeitshöhe 122 und die maximale Arbeitshöhe 125 bei reduzierter Geschwindigkeit dargestellt.

Die Energieabnahme vom Stromabnehmer 100 kann über Stromschienen oder Kabel erfolgen, welche ebenfalls isoliert zum geerdeten Fahrzeugdach 101 ausgeführt sind. In Senklage 131 des Stromabnehmers 101 ergibt sich damit ein überwiegend kapazitiver Spannungsteiler, der durch die vorhandenen Geometrien zwischen Fahrleitung und Stromabnehmer 100 einerseits sowie zwischen Stromabnehmer 100 und Fahrzeugdach 101 andererseits gebildet wird. Der kapazitive Spannungsteiler ist in Figur 1 durch die Ersatzkomponenten C_{Cat-Pan} und C_{Pan-Roof} angedeutet. Die Kapazität C_{Cat-Pan} wird dabei zwischen Fahrdraht und abgesenktem Stromabnehmer gebildet, während die Kapazität C_{Pan-Roof} zwischen Stromabnehmer 100 und dem typischerweise auf Fahrzeugmassepotenzial liegenden Fahrzeugdach 101 gebildet wird.

Mit d_{Cat-Pan} ist der Abstand zwischen Senklage 131 und dem Fahrdraht angedeutet, wobei der tatsächliche Abstand auf Grund des Seilkurvenverlaufs des Fahrdrahts unbekannt ist. Mit 1_{Pan} ist die Länge des Oberarms 106 bezeichnet und mit d_{Pan-Roof} ist der Abstand zwischen Fahrzeugdach 101 und Rahmen 103 bezeichnet.

Zur Bewertung des erfassten Spannungssignals (Fahrleitungsspannung) dient eine Einrichtung 110, welche hier durch Ersatzkomponenten R_{VD} und L_{VD} dargestellt ist. Die Einrichtung 110 ist für die in Frage kommenden Wechselspannungen sehr hochohmig ausgelegt, was durch entsprechende Dimensionierung insbesondere der induktiven Ersatzkomponente L_{VD} gut einstellbar ist. Die Impedanz der Einrichtung 110 kann beispielsweise größer als 100 MOhm für die in Frage kommenden Frequenzen im Bereich vom 16 bis 50 Hz sein.

Weiterhin zeigt Figur 1 die Gesamtkapazität der Elemente zur Energieabnahme (Stromschienen, Kabel), die durch die Ersatzkomponente C_{Cable} dargestellt ist. Die konkreten Werte sämtlicher Kapazitäten hängen von Faktoren wie Höhe der Fahrleitung, Geometrie des Stromabnehmers und Daten weiterer angeschlossener Komponenten ab. Desweiteren können Umwelteinflüsse wie Temperatur, Luftfeuchte, Verschmutzung der Komponenten usw. die Parameter beeinflussen. Die Kapazitäten C_{Pan-Roof} und C_{Cable} (C_{Cable} ist parallel zur Kapazität C_{Pan-Roof} geschaltet), können jedoch messtechnisch weitgehend sicher und, sofern erforderlich, vor jeder Erfassung der Fahrdrahtspannung entweder einzeln oder zusammen in Parallelschaltung erfasst werden. Für die Kapazität C_{Cat-Pan} kann eine unmittelbare messtechnische Erfassung dagegen nicht vorgenommen werden, so dass diese entweder geschätzt oder auf Basis typischer Werte angenommen werden muss.

Da eine genaue Messung der Spannungshöhe einer am Fahrdraht anliegenden Wechselspannung aufgrund der oben genannten Einflüsse teilweise nur bedingt durchgeführt werden kann, erfolgt in einem ersten Schritt eine Unterscheidung zwischen den beiden Hauptklassen der Spannungssysteme, nämlich zwischen Gleichspannungssystem und Wechselspannungssystemen. Somit kann zumindest die "Systemerkennung" AC oder DC kontaktlos erfolgen. Diese Systemerkennung kann auf Basis einer Frequenzfilterung und/oder der erfassten Spannungshöhe erfolgen.

Die Unterscheidung zwischen den Spannungssystemen ist deswegen möglich, da es nur wenige und damit auch vorbekannte Spannungssysteme gibt, zwischen denen unterschieden werden muss. Wie bereits oben angedeutet, sind die vier für Europa im Wesentlichen in Frage kommenden Spannungssystem 25 kV Wechselspannung mit 50 Hz, 15 kV Wechselspannung mit 16,7 Hz, 3 kV Gleichspannung und 1,5 kV Gleichspannung.

Damit lassen sich selbst bei Verwendung des oben beschriebenen Spannungsteilers folgende Fälle sicher voneinander unterscheiden, wobei der abgesenkte bzw. nicht angehobene Stromabnehmer 100 in dieser Ausführungsform als kapazitiver Sensor dient:
- eines der beiden Wechselspannungssysteme AC 15 kV und 25 kV oder
- eines der beiden Gleichspannungssysteme DC 1,5 kV und DC 3 kV oder keine bzw. keine ausreichend hohe Spannung.

Die vorstehend genannten Fälle lassen sich damit als Mindestkriterien für die Bewertung nutzen, ob ein vom Triebfahrzeugführer oder auch automatisch gewähltes Bahnstromsystem mit dem tatsächlich vorhandenen Bahnstromsystem vereinbar ist. Diese Bewertung ermöglicht damit eine sichere Unterscheidung zwischen Gleichspannungs- und Wechselspannungssystem.

Gemäß einer Ausführungsform kann diese erste Unterscheidung allein auf Basis der Höhe des durch den kapazitiven Spannungsteiler erfassten Spannungssignals erfolgen. Dazu ist parallel zu den Kapazitäten C_{Pan-Roof} und C_{Cable} ein induktiver Spannungswandler, hier gebildet von der Induktivität L_{VD}, geschaltet. Die Induktivität L_{VD} kann beispielsweise die Primärspule eines Transformators sein, wobei dann sekundärseitig ein dem Spannungssignal entsprechender Wert abgegriffen werden kann.

Gemäß einer Ausführungsform ist die Einrichtung 110 hochspannungsfest ausgelegt. Gemäß einer Ausführungsform kann die Einrichtung 110 elektrisch vom Rahmen 103 und Stromabnehmer 100 getrennt werden. In beiden Fällen dient es der Sicherheit, wenn der Stromabnehmer 100 in Kontakt mit dem unter Spannung stehenden Fahrdraht tritt.

Die Einrichtung 110 ist Teil eines Sensorsystems zur Erfassung der am Fahrdraht anliegenden Spannung. Das Sensorsystem umfasst in der hier beschriebenen Ausführungsform weiterhin den kapazitiven Spannungsteiler. Ausgangsseitig kann die Einrichtung 110 mit einem hier nicht näher dargestellten Steuersystem verbunden sein, welches auf Basis der erfassten Spannung zum einen die Bewertung durchführt und zum anderen die Freigabe des Stromabnehmers initiiert.

Die beiden genannten Wechselspannungssysteme unterscheiden sich außer durch die Spannungshöhe auch in der Frequenz. Während das 15 kV System mit 16,7 Hz betrieben wird, beträgt die Frequenz des 25 kV Systems 50 Hz. Damit werden insbesondere drei Fälle unterscheidbar:
- das Wechselspannungssystem 15 kV / 16,7 Hz,
- das Wechselspannungssystem 25 kV / 50 Hz,
- eines der beiden Gleichspannungssysteme DC 1,5 kV und DC 3 kV oder keine bzw. keine ausreichend hohe Spannung.

Zu diesem Zweck kann gemäß einer Ausführungsform eine Frequenzfilterung des erfassten Spannungssignals, beispielsweise sekundärseitig am induktiven Spannungswandler, durchgeführt werden. Dabei kann die Phase der Systemunterscheidung zwischen Wechselspannung - Gleichspannung auf Grund der Höhe des erfassten Spannungssignals von der Unterscheidung zwischen den Wechselspannungssystemen entkoppelt werden. Es ist demnach möglich, zunächst die Spannungshöhe zu erfassen und dann eine Frequenzfilterung durchzuführen. Grundsätzlich ist es auch möglich, dass dies parallel erfolgt oder das die Systemerkennung nur auf Basis der Frequenzfilterung oder einer Frequenzdiskriminierung erfolgt

Die Frequenzfilterung kann vom Sensorsystem oder auch vom Steuersystem vorgenommen werden.

Eine Steuerung der Stromabnehmer, d.h. Bewertung, ob das vorgewählte Betriebsstromsystem mit dem tatsächlich vorhandenen Betriebsstromsystem vereinbar ist, kann gemäß den in nachfolgender Tabelle 1 gezeigten Kriterien erfolgen, wobei mit System das vorgewählte Bahnstromsystem gemeint ist.

**Tabelle I**

| Angeforderter Stromabnehmer für System: | Detektiertes Signal | | | Systemauswahl |
|---|---|---|---|---|
| | 50 Hz | 16.7 Hz | Null / undefiniert | |
| **AC 25 kV / 50 Hz** | x | - | - | System OK, Stromabnehmer wird gehoben |
| | - | x | - | Falsches System; Stromabnehmer bleibt gesenkt |
| | - | - | x | Kein oder falsches System; Stromabnehmer bleibt gesenkt |
| **AC 15 kV / 16.7 Hz** | x | - | - | Falsches System; Stromabnehmer bleibt gesenkt |
| | - | x | - | System OK, Stromabnehmer wird gehoben |
| | - | - | x | Kein oder falsches System; Stromabnehmer bleibt gesenkt |
| **DC 3 kV** | x | - | - | Falsches System; Stromabnehmer bleibt gesenkt |
| | - | x | - | Falsches System; Stromabnehmer bleibt gesenkt |
| | - | - | x | Kein System oder OK, Stromabnehmer wird gehoben |
| **DC 1.5 kV** | x | - | - | Falsches System; Stromabnehmer bleibt gesenkt |
| | - | x | - | Falsches System; Stromabnehmer bleibt gesenkt |
| | - | - | x | Kein System oder OK, Stromabnehmer wird gehoben |

Bezogen auf die Wechselspannungssysteme lassen sich damit mehrere Vorteile erzielen. So können anstelle der bisher verwendeten Mehrsystem-fähigen Detektionseinrichtungen ein oder mehrere induktiv arbeitende Spannungswandler verwendet werden. Diese sind deutlich kostengünstiger und robuster.

Grundsätzlich ist es möglich, die Anzahl der Komponenten bei den bisher üblichen Mehrsystem-fähigen Spannungserkennungsystemen zu verringern, da auf separate Wechselspannungs- und Gleichspannungswandler zurückgegriffen werden kann, welche ohnehin bereits vorhanden sind. Für ein Wechselspannungssystem erfolgt die Systemerkennung vor dem Anheben des Stromabnehmers über einen bereits vorhandenen induktiven Spannungswandler. Für ein Gleichspannungssystem erfolgt die Systemerkennung vor dem Anheben des Stromabnehmers über den induktiven Spannungswandler des Wechselspannungssystems oder über einen nach dem Widerstandsprinzip arbeitenden Wandler des Gleichspannungssystems, wobei dieser ebenfalls eine ausreichend hohe Impedanz, beispielsweise größer als 100 MOhm, aufweisen sollte.

Bei den bisher verwendeten Stromabnehmern einschließlich weiterer Komponenten und Detektionseinrichtungen war es erforderlich, dass diese für die höchste auftretende Spannungsklasse, beispielsweise 25 kV, aufgrund der TSI ausgelegt sind, um sicherzustellen, dass selbst bei einer Fehlaufrüstung (beispielsweise ein 3 kV Stromabnehmer bei tatsächlich vorhandenem 25 kV Bahnstromsystem) die Sicherheit des Schienenfahrzeugs gewährleistet ist. Dies ist nun nicht mehr erforderlich, da die Erfassung der Fahrdrahtspannung, zumindest jedoch die Unterscheidung zwischen Gleichspannungs- und Wechselspannungssystemen, vor dem Aufrüsten erfolgt, so dass eine Fehlaufrüstung eines Gleichspannungs-Stromabnehmers an ein Wechselspannungssystem unterbunden wird.

Darüber hinaus lassen sich insbesondere für die Gleichspannungssysteme weitere Vorteile erzielen. So können hohe Stützisolatoren für 25 kV Wechselspannung durch kleinere und leichtere für 3 kV Gleichspannung ersetzt werden. Aufgrund der TSI war es auch hier erforderlich, dass alle Stromabnehmer für die höchste auftretende Spannungsklasse ausgelegt waren.

Darüber hinaus kann die Bauhöhe der Gleichspannungsstromabnehmer in Senklage deutlich reduziert werden. Beispielsweise ist eine Reduktion um ca. 150 mm möglich.

Auch bei den Gleichspannungsstromabnehmern können die bisher erforderlichen Mehrsystem-fähigen und für 25 kV Wechselspannung isolierten Detektionseinrichtungen durch kleinere und leichtere sowie für 3 kV isolierte Detektionseinrichtungen (beispielsweise Einrichtung 110) ersetzt werden.

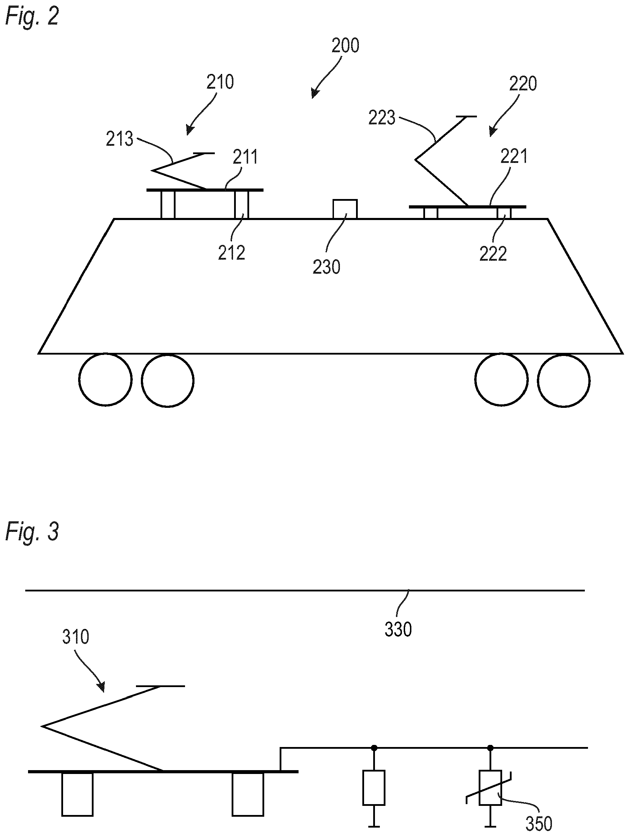

Ein weiterer Vorteil ist, dass der oder die Gleichspannungs-Stromabnehmer direkt mit einem Überspannungsableiter abgesichert werden können. Dies ist beispielhaft in Figur 3 dargestellt. Der dort gezeigte Stromabnehmer 310 ist direkt mit einem Überspannungsableiter 350 in Form eines Varistors verbunden. Bisher war es erforderlich, dass schaltungstechnisch der Systemwahlschalter zwischen Stromabnehmer 310 und Überspannungsableiter 350 geschaltet war, denn es konnte bei den bisherigen Systemen nicht verhindert werden, dass ein für das anliegende Bahnstromsystem nicht geeigneter Stromabnehmer irrtümlicherweise angehoben wurde. Dies kann bei der hier beschriebenen Herangehensweise ausgeschlossen werden. Die Isolation zwischen dem Gleichspannungsstromabnehmer 310 und dem Fahrdraht 330 erfolgt daher durch den Luftzwischenraum.

Darüber hinaus kann der Systemwahlschalter für den Wechselspannungs- / Gleichspannungsbetrieb entfallen, da ja Gleichspannungsstromabnehmer nur dann angehoben werden, wenn sicher ausgeschlossen ist, dass kein Wechselstromsystem anliegt.

Vorteilhaft ist weiterhin, dass sich systemübergreifend baugleiche Komponenten für Einfrequenz-, Mehrfrequenz- und Mehrsystem-Fahrzeuge verwenden lassen, d.h. es müssen herstellerseitig weniger unterschiedliche Baugruppen vorgehalten werden, was die Möglichkeit für eine Standardisierung und damit Kostenersparnis verbessert. Beispielsweise können für Mehrsystem-Fahrzeuge die gleichen Gleichspannungsstromabnehmer einschließlich deren Isolierung und weiterer Komponenten wie bei reinen Gleichspannungsschienenfahrzeugen verwendet werden, da auf die hohe Wechselspannungsisolation verzichtet werden kann.

Günstig ist weiterhin, dass ein unnötiges Anheben eines Stromabnehmers bei fehlendem oder falschem Spannungssystem vermieden wird. Dies kann besonders beim Aufrüsten mit weitgehend entladenem Druckluftspeicher und schwacher Batterie von großem Vorteil sein.

Darüber hinaus kann die Aerodynamik und Aeroakustik des Gesamtfahrzeuges durch Wegfall von Komponenten und Absenkung der Gleichspannungsstromabnehmer verbessert werden.

Gemäß einer weiteren Ausführungsform ermöglicht die hier beschriebene Systemerkennung durch kontaktlose Erfassung des Spannungssignals auch eine eindeutige Unterscheidbarkeit zwischen einer vorhandenen Gleichspannung und keiner Spannung. Dazu wird der Oberwellengehalt der am Fahrdraht anliegenden Spannung erfasst. Es wird dabei der Effekt ausgenutzt, dass die für die Speisung des Fahrdrahts verantwortlichen Unterwerke die Gleichspannung durch Gleichrichtung einer Wechselspannung vornehmen und somit einen Oberwellen-behafteten Gleichspannungsverlauf erzeugen. Je nach technischer Ausführung der Gleichrichtung, d.h. beispielsweise nach Brückenanzahl pro Phase der speisenden Wechselspannung und anschließender Filterung, unterscheiden sich Gleichspannungen am Fahrdraht in Frequenz und Amplitude der Oberwellen. Dies kann zusätzlich bei der Dimensionierung der Systemerkennung und Signalverarbeitung berücksichtigt werden.

Grundsätzlich ist es damit möglich, zu unterscheiden, ob eine Gleichspannung oder überhaupt keine Spannung am Fahrdraht anliegt, so dass im Vergleich zur Table I auch zwischen DC 3 kV bzw. 1,5 kV und keiner Spannung sicher unterschieden werden kann.

Bei den oben beschriebenen Ausführungsformen wurde wenigstens einer der vorhandenen Stromabnehmer als Sensor genutzt. Es ist möglich, nur einen einzigen Stromabnehmer pro Schienenfahrzeug zum Erfassen der anliegenden Spannung zu verwenden. Alternativ können zwei oder alle Stromabnehmer verwendet werden, wobei bei Verwendung von zwei Stromabnehmern mit beispielsweise unterschiedlicher Bauart die Zuverlässigkeit bei der Erfassung verbessert werden kann.

Gemäß einer weiteren Ausführungsform der hier vorgeschlagenen kontaktlosen Systemerkennung erfolgt die Erfassung der anliegenden Spannung nur durch den ersten und/oder letzten Stromabnehmer. Damit ergeben sich weitere Vorteile durch den Wegfall der Systemerkennungen pro Stromabnehmer, ohne den Nachteil des Anhebens "falscher" Stromabnehmer in Kauf nehmen zu müssen.

Eine weitere Ausführung der hier vorgeschlagenen kontaktlosen Systemerkennung ist durch eine Erfassung der Fahrdrahtspannung mittels speziell ausgebildeter Sensoren auf dem Fahrzeugdach 101 des Schienenfahrzeuges möglich. Damit ergeben sich weitere Vorteile durch den Wegfall aller Systemerkennungen pro Stromabnehmer. Eine optimierte Auslegung der Sensorik der Systemerkennung, z. B. als kapazitiver Spannungsteiler oder auch als Feldsensor ist möglich, ohne in die Gestaltung der Hochspannungsausrüstung eingreifen zu müssen. Durch die Separierung zwischen Sensorik und Hochspannungsausrüstung benötigt die Sensorik keine speziellen Isolationen und ermöglicht eine vereinfachte Signalauskopplung und -verarbeitung.

Das Sensorsystem kann somit über wenigstens einen Sensor verfügen, der gegenüber Hochspannungskomponenten wie beispielsweise den Stromabnehmern isoliert ist. Als Sensor kommt auch hier beispielsweise wieder ein kapazitiver Sensor, beispielsweise in Form einer Antenne, in Betracht, wobei die Erfassung der am Fahrdraht anliegenden Spannung über einen kapazitiven Spannungsteiler erfolgen kann.

Weitere geeignete Sensoren sind Elektroskope, Elektrofeldmeter oder auch Rotationsvoltmeter.

Die vorstehend beschriebenen Herangehensweisen lassen sich auch wie folgt zusammenfassen, wobei hier insbesondere zwei Fälle betrachtet werden.

Gemäß einem ersten Verfahren werden folgende Schritte durchgeführt:
- Systemauswahl durch Triebfahrzeug-Führer;
- Kapazitive Messung der Fahrleitungssignals;
- Frequenzfilterung des Fahrleitungssignals;
- Bewertung, ob "Fingerprint" zum gewählten System passt, wobei unter "Fingerprint" hier charakteristische Parameter wie insbesondere Spannungshöhe und Frequenz gemeint sind;
- Wenn ja, dann Anheben des zugehörigen Stromabnehmers und wenn Spannung im zulässigen Bereich, dann Freigeben des zugehörigen Fahrzeughauptschalters;
- Wenn nein, dann Fehlermeldung.

Bei der Umsetzung des vorstehend beschriebenen ersten Verfahrens können insbesondere ein oder mehrere der folgenden Aspekte berücksichtigt werden:
- Stromabnehmer sind in der Regel isoliert und hochohmig, solange sie abgesenkt sind. Damit koppelt sich ein Teil der Fahrleitungsspannung auf den Stromabnehmer (Pantographen) ein, wenn es sich um eine Wechselspannung handelt oder um eine Gleichspannung mit überlagertem Wechselanteil.
- Die Höhe der Einkopplung hängt von der Geometrie der Fahrleitung (Fahrdrahthöhe, -anordnung) sowie des Fahrzeugs (Dachhöhe, Stromabnehmer-Anordnung in Senklage, Formgebung usw.) ab. Desweiteren haben an den Stromabnehmer angeschlossene Komponenten über ihr Impedanzverhalten Einfluss auf die Höhe der Einkopplung.
- Alle Einflüsse wirken sich auf die Höhe der gemessenen Spannung, nicht aber auf das charakteristische Frequenzverhalten aus, so dass zumindest hinsichtlich des Frequenzverhaltens für jedes Spannungssystem ein typischer "SystemFingerPrint" ermittelt werden kann.
- Die vorstehend genannten Einflüsse auf die Einkopplung können durch Mehrfachmessung mit unterschiedlichen Messkapazitäten und/oder Verwendung unterschiedlicher Sensoren abgemildert und so zusätzlich ein für jedes Spannungssystem typisches Spannungsverhalten ermittelt werden.

Gemäß einem zweiten Verfahren (vereinfachtes Verfahren ohne Bewertung des Frequenzinhaltes von Gleichspannungen) werden folgende Schritte durchgeführt:
- Systemauswahl durch Triebfahrzeug-Führer;
- Kapazitive Messung der Fahrleitungssignals;
- Frequenzfilterung des Fahrleitungssignals: "Sind 16,7 Hz bzw. 50 Hz vorhanden?";
- Bewertung, ob "SystemFingerPrint" zum gewählten System passt;
- Nur wenn EIN Frequenzsignal 16,7 bzw. 50 Hz vorhanden ist, darf der zugehörige Wechselspannungsstromabnehmer gehoben werden;
- Nur wenn KEIN Frequenzsignal 16,7 bzw. 50 Hz vorhanden ist, darf ein Gleichspannungsstromabnehmer gehoben werden;
- Anschließend, wenn Spannung im zulässigen Bereich, Freigabe des zugehörigen Fahrzeughauptschalters.

Bei der Umsetzung des vorstehend beschriebenen zweiten Verfahrens können insbesondere ein oder mehrere der folgenden Aspekte berücksichtigt werden:
- Verwendung einer kapazitiven Messsonde mit kleiner Kapazität zwischen Messsonde und Fahrzeug. Derartige Messsonden können speziell für optimale Einkopplung ausgelegt sein.
- Es koppelt sich ein Teil der Fahrleitungsspannung auf die Sonde ein, wenn es sich um eine Wechselspannung handelt oder um eine Gleichspannung mit überlagertem Wechselspannungsanteil.
- Auch eine direkte Messung des Gleichspannungssignals ist mit einem speziellen Sensor für den Nachweis elektrostatischer Felder möglich, wie Elektroskop, Elektrofeldmeter oder auch Rotationsvoltmeter.
- Die Höhe der Einkopplung hängt von der Geometrie der Fahrleitung (Fahrdrahthöhe, -anordnung) sowie der Sonde ab. Desweiteren haben an den Stromabnehmer angeschlossene Komponenten über ihr Impedanzverhalten Einfluss auf die Einkopplung.
- Alle Einflüsse wirken sich auf die Höhe der gemessenen Spannung, nicht aber auf das charakteristische Frequenzverhalten "SystemFingerPrint" aus.

Figur 2 zeigt eine weitere Ausführungsform, wobei mit 200 ein Schienenfahrzeug oder Triebfahrzeug bezeichnet ist. Das Schienenfahrzeug verfügt in dieser Ausführungsform über einen ersten Stromabnehmer 210 mit einem Arm 213 und einen zweiten Stromabnehmer 220 mit einem Arm 223. Der erste Stromabnehmer 210 ist für ein erstes Wechselspannungssystem ausgelegt, der zweite Stromabnehmer 220 für ein Gleichspannungssystem oder ein zweites Wechselspannungssystem. Jeder der Stromabnehmer 210, 220 ist gegenüber dem Schienenfahrzeug 200 jeweils mittels Isolatoren 212, 222 isoliert, die für jeden Stromabnehmer 210, 220 einen jeweiligen Rahmen 211, 221 tragen, auf denen der jeweilige Stromabnehmer 210, 220 befestigt ist.

Wie in Figur 2 dargestellt, sind die Isolatoren 222 des zweiten Stromabnehmers 220 kleiner als die Isolatoren 212 des ersten Stromabnehmers 210. Ist der zweite Stromabnehmer 220 beispielsweise ein Gleichspannungsstromabnehmer, können die hohen 25-kV Isolatoren durch flache 3-kV Isolatoren ersetzt werden, was eine Verringerung der Gesamtbauhöhe der Gleichspannungsstromabnehmer mit sich bringt.

Dies ist möglich, da die Systemerkennung bei diesem Schienenfahrzeug 200 wie weiter oben beschrieben erfolgt. Zu diesem Zweck weist das Schienenfahrzeug einen Sensor 230 auf, der auf dem Fahrzeugdach des Schienenfahrzeugs geeignet befestigt ist.

Separate Sensoren können insbesondere dann verwendet werden, wenn der Stromabnehmer integrierte Isolatoren aufweist, da ein abgesenkter Stromabnehmer dann geerdet ist und somit nicht mehr als kapazitiver Spannungsteiler genutzt werden kann.

Der Gleichspannungsstromabnehmer (zweiter Stromabnehmer 220) ist hier in angehobener Stellung gezeigt, während der Wechselspannungsstromabnehmer (erster Stromabnehmer 210) abgesenkt ist.

Mit der hier gezeigten Ausführungsform ist insbesondere eine zentrale Systemerkennung (einmal pro Fahrzeug) anstatt dezentral (einmal pro Stromabnehmer) möglich. Dazu kann der Sensor 230 verwendet werden.

Es ist jedoch auch möglich, alternativ oder zusätzlich einen oder alle Stromabnehmer 210, 220 zu verwenden, wobei dann die zwischen Fahrleitung und abgesenktem Stromabnehmer befindliche Luftstrecke als Isolator zum Aufbau eines kapazitiven Spannungsteilers verwendet wird.

Die Ausgestaltung des Schienenfahrzeugs ist insbesondere für den Fernverkehr konzipiert, kann jedoch auch auf den Regional- oder Personennahverkehr übertragen werden.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen.

### Bezugszeichenliste

- 100: Strohmabnehmer
- 101: Dach
- 102: Stützisolator
- 103: Rahmen
- 105: Unterarm
- 106: Oberarm
- 110: Einrichtung
- 121: Maximale Höhe in Senklage
- 122: Minimale Arbeitshöhe bei reduzierter Geschwindigkeit
- 123: Minimale Arbeitshöhe bei Betriebsgeschwindigkeit
- 124: Maximale Arbeitshöhe bei Betriebsgeschwindigkeit
- 125: Maximale Arbeitshöhe bei reduzierter Geschwindigkeit
- 131, 132, 133: Arbeitslagen des Stromabnehmers
- 200: Schienenfahrzeug / Triebfahrzeug
- 210, 220, 310: Stromabnehmer
- 211,221: Rahmen
- 212,222: Isolator
- 213,223: Arm
- 230: Sensor
- 330: Fahrdraht
- 350: Überspannungsableiter

## Patentansprüche

1. Vorrichtung zur Auswahl eines Stromabnehmers eines Mehrsystemschienenfahrzeugs mit mindestens zwei für unterschiedliche Spannungssysteme ausgelegten Stromabnehmern, umfassend:
― zumindest ein Sensorsystem (100, 110, 230), das eingerichtet ist, zwischen unterschiedlichen an einem Fahrdraht anliegenden Spannungssystemen kontaktlos zu unterscheiden, wobei das Sensorsystem (100, 110, 230) wenigstens einen Feldsensor (230) oder einen kapazitiven Sensor (230) umfasst, die angepasst sind, elektrisch gegenüber den Stromabnehmern (210, 220) isoliert zu sein; und
― ein Steuersystem angepasst zur Auswahl eines Stromabnehmers aus den mindestens zwei Stromabnehmern (210, 220) auf Basis des vom Sensorsystem (230) erfassten Spannungssystems;
― wobei die Vorrichtung angepasst ist, nach Anheben des ausgewählten Stromabnehmers (210, 220) das tatsächlich am Fahrdraht anliegende Spannungssystem mittels des angehobenen Stromabnehmers (210, 220) abzugreifen und die Zuschaltung weiterer Komponenten freizugeben, wenn das tatsächlich anliegende Spannungssystem mit dem kontaktlos erfassten Spannungssystem übereinstimmt; und
― wobei das Steuersystem eingerichtet ist, die Auswahl des Stromabnehmers (210, 220) durch Vergleich des durch das Sensorsystem (100, 110, 230) erfassten Spannungssystems mit vorgewählten Kriterien vorzunehmen und wobei das Steuersystem weiterhin eingerichtet ist, das Anheben des ausgewählten Stromabnehmers (210, 220) freizugeben.

2. Vorrichtung nach Anspruch 1, **dadurch gekennzeichnet, dass** die Vorrichtung eine Einrichtung zur Frequenzfilterung eines erfassten Spannungssignals umfasst.

3. Verfahren zur Auswahl eines Stromabnehmers, umfassend:
― Erfassen eines am Fahrdraht anliegenden Spannungssignals durch eine kontaktlose Messung, wobei das Spannungssignal mittels eines kapazitiven Sensors (230) oder eines Feldsensors (230) erfasst wird, die elektrisch gegenüber den Stromabnehmern isoliert sind;
― Vergleichen des kontaktlos erfassten Spannungssignals mit vorgegebenen Kriterien und Auswahl eines Spannungssystems auf Basis des erfassten Spannungssignals;
― Anheben eines dem ausgewählten Spannungssystem zugeordneten Stromabnehmers (210, 220) aus mindestens zwei für unterschiedliche Spannungssysteme ausgelegten Stromabnehmern;
― Abgreifen der am Fahrdraht anliegenden Spannung mittels des angehobenen Stromabnehmers (210, 220);
― Entscheiden, ob das kontaktlos ermittelte Spannungssystem mit der abgegriffenen Spannung vereinbar ist; und
― Zuschalten weiterer Komponenten, wenn der angehobene Stromabnehmer mit der abgegriffenen Spannung vereinbar ist.

4. Verfahren nach Anspruch 3, **dadurch kennzeichnet, dass** das erfasste Spannungssignal einer Frequenzfilterung unterworfen wird und die Auswahl des Spannungssystems auf Basis des Ergebnisses der Frequenzfilterung erfolgt.

5. Schienenfahrzeug mit wenigsten einem erstem Stromabnehmer (210), der für ein erstes Wechselspannungssystem ausgelegt ist, und einem zweiten Stromabnehmer (220), der für ein Gleichspannungssystem oder ein zweites Wechselspannungssystem ausgelegt ist, wobei jeder der Stromabnehmer (210, 220) über Isolatoren (212, 222) gegenüber dem Fahrzeugdach des Schienenfahrzeugs isoliert ist, **dadurch gekennzeichnet, dass** die Isolatoren (222) des zweiten Stromabnehmers (220) eine andere Spannungsklasse aufweisen als die Isolatoren (212) des ersten Stromabnehmers (210), und dass das Schienenfahrzeug eine Vorrichtung nach einem der Ansprüche 1 bis 2 aufweist.

## Claims

1. Device for selecting a pantograph of a multi-system rail vehicle with at least two pantographs designed for different voltage systems, comprising:
- at least one sensor system (100, 110, 230) configured to discriminate between different voltage systems applied to a catenary wire without contact, wherein the sensor system (100, 110, 230) comprises at least one field sensor (230) or capacitive sensor (230) adapted to be electrically insulated from the pantographs (210, 220); and
- a control system adapted to select a pantograph from the at least two pantographs (210, 220) based on the voltage system detected by the sensor system (230);
- wherein the device is adapted, after lifting the selected pantograph (210, 220), to sense the voltage system actually applied to the catenary wire by means of the lifted pantograph (210, 220) and to enable the connection of further components if the voltage system actually applied coincides with the voltage system sensed without contact; and
- wherein the control system is configured to select the pantograph (210, 220) by comparing the voltage system sensed by the sensor system (100, 110, 230) with predetermined criteria, and wherein the control system is further configured to enable the lifting of the selected pantograph (210, 220).

2. Device according to claim 1, **characterized in that** the device comprises means for frequency filtering a detected voltage signal.

3. A method of selecting a pantograph comprising:
- sensing a voltage signal applied to the catenary wire by a non-contact measurement, wherein the voltage signal is detected by means of a capacitive sensor (230) or a field sensor (230) electrically insulated from the pantographs;
- comparing the contactlessly sensed voltage signal with predetermined criteria and selecting a voltage system based on the sensed voltage signal;
- lifting a pantograph (210, 220) associated with the selected voltage system from at least two pantographs designed for different voltage systems;
- tapping the voltage applied to the catenary wire by means of the lifted pantograph (210, 220);
- deciding whether the voltage system determined without contact is compatible with the tapped voltage; and
- connecting further components if the lifted pantograph is compatible with the tapped voltage.

4. Method according to claim 3, **characterised in that** the detected voltage signal is subjected to frequency filtering and the voltage system is selected on the basis of the result of the frequency filtering.

5. A rail vehicle comprising at least a first pantograph (210) adapted for a first AC voltage system and a second pantograph (220) adapted for a DC voltage system or a second AC voltage system, wherein each of the pantographs (210, 220) is insulated by insulators (212, 222) with respect to the roof of the rail vehicle, **characterized in that** the insulators (222) of the second pantograph (220) comprise a different voltage class than the insulators (212) of the first pantograph (210), and **in that** the rail vehicle comprises a device according to one of claims 1 to 2.

## Revendications

1. Dispositif destiné à la sélection d'un pantographe d'un véhicule ferroviaire multi-systèmes comportant au moins deux pantographes conçus pour des systèmes de tension différents, comprenant :
- au moins un système de capteurs (100, 110, 230) conçu pour distinguer, sans contact, différents systèmes de tension appliqués à un caténaire, le système de capteurs (100, 110, 230) comprenant au moins un capteur de champ (230) ou un capteur capacitif (230) adaptés pour être isolés électriquement des pantographes (210, 220) ; et
- un système de commande adapté pour sélectionner un pantographe parmi les au moins deux pantographes (210, 220) sur la base du système de tension détecté par le système de capteurs (230) ;
- dans lequel le dispositif est adapté, après avoir soulevé le pantographe (210, 220) sélectionné, pour prélever le système de tension réellement appliqué au caténaire au moyen du pantographe (210, 220) soulevé et pour permettre la connexion d'autres composants si le système de tension réellement appliqué correspond au système de tension détecté sans contact ; et
- dans lequel le système de commande est configuré pour effectuer la sélection du pantographe (210, 220) en comparant le système de tension détecté par le système de capteurs (100, 110, 230) avec des critères présélectionnés, et dans lequel le système de commande est en outre configuré pour permettre de soulever le pantographe (210, 220) sélectionné.

2. Dispositif selon la revendication 1, **caractérisé en ce que** le dispositif comprend un moyen destiné au filtrage de fréquence d'un signal de tension détecté.

3. Procédé destiné à la sélection d'un pantographe, comprenant :
- la détection d'un signal de tension appliqué au caténaire au moyen d'une mesure sans contact, le signal de tension étant détecté au moyen d'un capteur capacitif (230) ou d'un capteur de champ (230) isolés électriquement des pantographes ;
- la comparaison du signal de tension détecté sans contact avec des critères prédéfinis et la sélection d'un système de tension sur la base du signal de tension détecté ;
- le levage d'un pantographe (210, 220) affecté au système de tension sélectionné parmi au moins deux pantographes conçus pour des systèmes de tension différents ;
- la prise de la tension appliquée au caténaire au moyen du pantographe (210, 220) soulevé ;
- la décision du fait de savoir si le système de tension déterminé sans contact est compatible avec la tension prise ; et
- la connexion d'autres composants lorsque le pantographe soulevé est compatible avec la tension prise.

4. Procédé selon la revendication 3, **caractérisé en ce que** le signal de tension détecté est soumis à un filtrage de fréquence et que le système de tension est sélectionné sur la base du résultat du filtrage de fréquence.

5. Véhicule ferroviaire comportant au moins un premier pantographe (210) conçu pour un premier système à tension alternative et un deuxième pantographe (220) conçu pour un système à tension continue ou un deuxième système à tension alternative, chaque pantographe (210, 220) étant isolé du toit de véhicule du véhicule ferroviaire par l'intermédiaire d'isolateurs (212, 222), **caractérisé en ce que** les isolateurs (222) du deuxième pantographe (220) présentent une classe de tension différente de celle des isolateurs (212) du premier pantographe (210) et **en ce que** le véhicule ferroviaire présente un dispositif selon l'une des revendications 1 à 2.
